# EUROPÄISCHE PATENTSCHRIFT

(11) **EP 3 000 576 B1**
(45) Veröffentlichungstag und Bekanntmachung des Hinweises auf die Patenterteilung: **09.05.2018**
(21) Anmeldenummer: 15179846.9
(22) Anmeldetag: 05.08.2015
(51) Int. Cl.: B29C 45/00

(54) **WERKZEUG MIT OBERFLÄCHENRAUHIGKEIT AN DER BINDENAHTSTELLE**
MOULD WITH ROUGHNESS AT THE WELDLINEWALL
MOULE AVEC RUGOSITE À LA LIGNE DE SOUDURE

(30) Priorität: 26.09.2014 DE 102014114033
(43) Veröffentlichungstag der Anmeldung: 30.03.2016
(73) Patentinhaber: Thorsten, Michel, 56355 Lautert (DE)
(72) Erfinder: Thorsten, Michel, 56355 Lautert (DE)
(74) Vertreter: Klein, Thomas

(56) Entgegenhaltungen:
- EP-A1- 2 664 437
- JP-U- S5 860 421
- US-A- 5 833 913

## Beschreibung

Die Erfindung bezieht sich auf eine zwei- oder mehrteilige, einen Formhohlraum aufweisende Form zur Herstellung von Formkörpern aus viskoser Kunststoffmasse, wobei über eine Füllöffnung die viskose Kunststoffmasse in den Formhohlraum einspritzbar ist und sich in mehreren Schmelzströmen den Formhohlraum ausfüllend verteilt sowie bei Aufeinandertreffen der Kunststoffmasse Bindenähte bildet.

Bei der Herstellung von Spritzgußteilen oder Kunststoffteilen aus Polyurethanschaum wird Kunststoffmasse unter Druck in den Formhohlraum eingespritzt. Dort breitet sich die Kunststoffmasse aus. Treffen während des Füllvorgangs zwei Teilströme aufeinander, bilden sich Bindenähte, die zu sichtbaren Markierungen an der Oberfläche des Formkörpers führen. Diese sichtbaren Markierungen können optisch und fertigungsmäßig störend sein, wenn sie sich an Stellen befinden, die an dem fertigen Formkörper gut sichtbar sind. Bei komplizierten Geometrien des Formhohlraums kann es auch zu nicht vollständig aufgefüllten Stellen des Formhohlraums kommen.

Aus der US 5 833 913 A ist eine Form der eingangs genannten Art bekannt. Unmittelbar vor dem Zusammentreffen der Schmelzströme sind in der Oberfläche des Formhohlraums mehrere parallel zueinander und quer zur Strömungsrichtung sich erstreckende Nuten ausgebildet, die dazu führen, daß die Schmelzströme unmittelbar vor dem Zusammentreffen ihrer Fronten aufgespalten werden. Nach dem Aufspalten der Schmelzströme erfolgt ein Schließen der Nuten.

Aufgabe der Erfindung ist es daher eine Form der eingangs genannten Art zu schaffen, durch die die Bindenähte an vorbestimmbaren Stellen des Formkörpers erzeugbar sind und die von der Kunststoffmasse vollständig ausfüllbar ist.

Diese Aufgabe wird erfindungsgemäß dadurch gelöst, daß an den Strömungswegen der Kunststoffmasse die Oberfläche der den Formhohlraum bildenden Konturflächen ein oder mehrere partielle Bereiche größerer Oberflächenrauhigkeit und geringerer Oberflächenrauhigkeit als deren benachbarte Bereiche der Oberfläche der den Formhohlraum bildenden Konturflächen vorhanden ist, wobei die Strömungswege der Kunststoffmasse beim Entlangströmen der Kunststoffmasse an den Bereichen größerer Oberflächenrauhigkeit und/oder geringerer Oberflächenrauhigkeit beeinflußbar und lenkbar sind.

Vorzugsweise sind dabei die größerer Oberflächenrauhigkeit und geringerer Oberflächenrauhigkeit geometrisch bestimmt.

Durch diese Ausbildung werden die die Strömungswege der Kunststoffmasse beim Entlangströmen an den Bereichen größerer Oberflächenrauhigkeit und geringerer Oberflächenrauhigkeit beeinflußt und gelenkt, so daß sie an solchen Stellen im Formhohlraum eine Bindenaht bilden, daß diese am Formkörper an die Optik nicht beeinflussender Stelle vorhanden ist. Dies ist möglichst auch der Bereich, der weniger belastungsempfindlich ist, da Bindenähte meist auch Stellen geringerer Festigkeit sind.

Bei komplizierten Geometrien des Formhohlraums können die Ströme der Kunststoffmasse so gelenkt werden, daß sie alle Bereiche des Formhohlraums, insbesondere Ecken und Vertiefungen sicher ausfüllen.

Zusätzliche Bauteile zur Beeinflussung der Ströme der Kunststoffmasse sind nicht erforderlich, so daß die Form einfach aufgebaut und damit kostengünstig ist.

Ragen ein oder mehrere Kerne in den Formhohlraum hinein- oder durch den Formhohlraum hindurch und beeinflussen dadurch den oder die Ströme der Kunststoffmasse in ungünstiger Weise, so kann eine Korrektur der Ströme der Kunststoffmasse durch die partiellen Bereiche größerer Oberflächenrauhigkeit und/oder geringerer Oberflächenrauhigkeit erfolgen.

Dazu kann auch die Oberfläche der Kerne ein oder mehrere partielle Bereiche größerer Oberflächenrauhigkeit und
geringerer Oberflächenrauhigkeit als deren benachbarte Bereiche der Oberfläche der Kerne aufweisen.

Die partiellen Bereiche geringerer Oberflächenrauhigkeit können polierte Bereiche sein.

Die Rautiefe in den partiellen Bereichen größerer Oberflächenrauhigkeit kann zwischen 1 µm und 1000 µm betragen.

Vorzugsweise beträgt Rauhtiefe zwischen 10 µm und 500 µm.

Die Oberflächenrauhigkeit der partiellen Bereiche größerer Oberflächenrauhigkeit kann durch Laserstrahlbearbeitung erzeugt sein, wodurch die Oberflächenrauhigkeit auf einfache Weise und mit hoher Präzision erzeugt und somit die Strömungswege der Kunststoffmasse mit erhöhter Genauigkeit gelenkt werden können.

Die Kunststoffmassen können Thermoplaste oder Duroplaste oder Kunststoffschäume oder Elastomere sein.

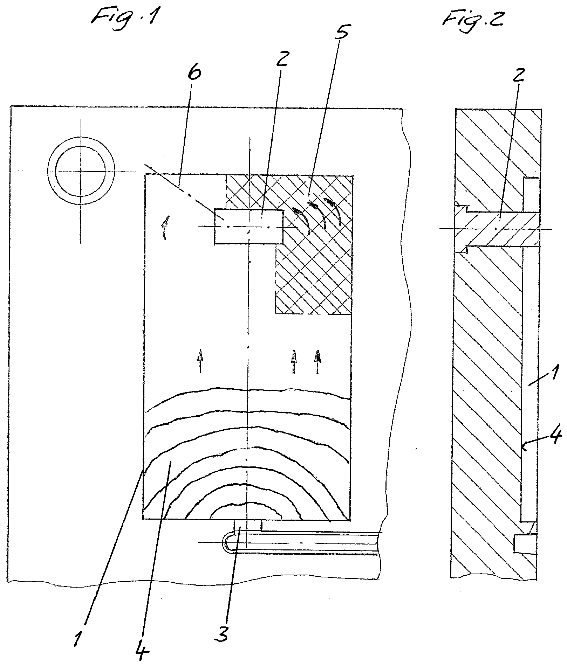

Ein Ausführungsbeispiel der Erfindung ist in der Zeichnung dargestellt und wird im Folgenden näher beschrieben. Es zeigen
- Figur 1: eine Formhälfte in der Draufsicht
- Figur 2: die Formhälfte nach Figur 1 im Querschnitt.

Die dargestellte Formhälfte einer Form weist einen Formhohlraum 1 auf, durch dessen oberen Bereich mittig ein Kern 2 quer hindurch ragt. Durch eine nicht dargestellte, die offene Seite des Formhohlraums 1 abdeckende Platte ist der Formhohlraum 1 verschließbar.

Die Bodenfläche 4 des Formhohlraums 1 ist in dem Bereich rechts und über dem Kern 2 als Bereich 5 größerer Oberflächenrauhigkeit als der Rest der Konturflächen des Formhohlraums 1 ausgebildet.

An seinem unteren Bereich mündet eine Einfüllöffnung 3 in den Formhohlraum 1, über die viskose Kunststoffmasse unter Druck in den Formhohlraum einspritzbar ist.

Erfolgt ein derartiges Einspritzen mit der Kunststoffmasse, so breitet sich diese von der Einfüllöffnung 3 aus nach oben aus und wird durch den Kern 2 in zwei Ströme geteilt.

Durch die mittige Anordnung des Kerns würden die beiden voneinander geteilten Ströme ohne Bereich 5 größerer Oberflächenrauhigkeit normalerweise oberhalb des Kerns 2 wieder aufeinander treffen und eine Bindenaht bilden. Diese Stelle ist sowohl aus optischen als auch aus Festigkeitsgründen ungünstig für eine Bindenaht.

Durch den Bereich 5 größerer Oberflächenrauhigkeit wird der Strom der Kunststoffmasse so beeinflußt, daß ein Aufeinandertreffen des über den Bereich 5 größerer Oberflächenrauhigkeit geführten Stroms und des links um den Kern 2 herumgeführten Stroms an einer links von dem Kern 2 befindlichen Aufeinandertreffstelle 6 aufeinandertreffen, so daß dort eine Bindenaht des Formkörpers entsteht.

### Bezugszeichenliste

- 1: Formhohlraum
- 2: Kern
- 3: Einfüllöffnung
- 4: Bodenfläche
- 5: Bereich größerer Oberflächenrauhigkeit
- 6: Aufeinandertreffstelle

## Patentansprüche

1. Zwei- oder mehrteilige, einen Formhohlraum (1) aufweisende Form zur Herstellung von Farmkörpern aus viskoser Kunststoffmasse, wobei über eine Einfüllöffnung (3) die viskose Kunststoffmasse in den Formhohlraum (1) einspritzbar ist und sich in mehreren Schmelzströmen den Formhohlraum (1) ausfüllend verteilt sowie bei Aufeinandertreffen der Kunststoffmasse Bindenähte bildet, **dadurch gekennzeichnet, daß** an den Strömungswegen der Kunststoffmasse die Oberfläche der den Formhohlraum (1) bildenden Konturflächen ein oder mehrere partielle Bereiche (5) größerer Oberflächenrauhigkeit und geringerer Oberflächenrauhigkeit als deren benachbarte Bereiche der Oberfläche der den Formhohlraum (1) bildenden Konturflächen vorhanden ist, wobei die Strömungswege der Kunststoffmasse beim Entlangströmen der Kunststoffmasse an den Bereichen (5) größerer Oberflächenrauhigkeit und geringerer Oberflächenrauhigkeit beeinflußbar und lenkbar sind.

2. Form nach Anspruch 1, **dadurch gekennzeichnet, daß** ein oder mehrere Kerne (2) in den Formhohlraum hinein- oder durch den Formhohlraum (1) hindurchragen.

3. Form nach Anspruch 2, **dadurch gekennzeichnet, daß** die Oberfläche der Kerne ein oder mehrere partielle Bereiche größerer Oberflächenrauhigkeit und/oder geringerer Oberflächenrauhigkeit als deren benachbarte Bereiche der Oberfläche der Kerne aufweisen.

4. Form nach einem der vorhergehenden Ansprüche, **dadurch gekennzeichnet, daß** die partiellen Bereiche geringerer Oberflächenrauhigkeit polierte Bereiche sind.

5. Form nach einem der vorhergehenden Ansprüche, **dadurch gekennzeichnet, daß** die Rautiefe in den partiellen Bereichen (5) größerer Oberflächenrauhigkeit zwischen 1 µm und 1000 µm beträgt.

6. Form nach einem der vorhergehenden Ansprüche, **dadurch gekennzeichnet, daß** die Oberflächenrauhigkeit der partiellen Bereiche (5) größerer Oberflächenrauhigkeit durch Laserstrahlbearbeitung erzeugt sind.

7. Form nach einem der vorhergehenden Ansprüche, **dadurch gekennzeichnet, daß** die Kunststoffmassen Thermoplaste oder Duroplaste oder Elastomere sind.

## Claims

1. Two- or multi-part mould which has a mould cavity (1) and is intended for the production of mouldings from viscous plastics composition where, by way of inlet aperture (3), the viscous plastics composition can be injected into the mould cavity (1) and, in a plurality of the melt streams, becomes distributed to fill the mould cavity (1), and also forms weld lines on encountering the plastics composition, **characterized in that** along the flowpaths of the plastics composition the surface of the shaped areas forming the mould cavity (1) is present one or more partial regions (5) of greater surface roughness and of lesser surface roughness than regions adjacent thereto on the surface of the shaped areas forming the mould cavity (1) where, when the plastics composition flows across the regions (5) of greater surface roughness and of lesser surface roughness, the flow paths of the plastics composition can be influenced and directed.

2. Mould according to Claim 1, **characterized in that** one or more cores (2) project into the mould cavity or project through the mould cavity (1).

3. Mould according to Claim 2, **characterized in that** the surface of the cores have one or more partial regions of greater surface roughness and/or of lesser surface roughness than regions adjacent thereto on the surface of the cores.

4. Mould according to any of the preceding claims, **characterized in that** the partial regions of lesser surface roughness are polished regions.

5. Mould according to any of the preceding claims, **characterized in that** roughness depth in the partial regions (5) of greater surface roughness is from 1 µm to 1000 µm.

6. Mould according to any of the preceding claims, **characterized in that** the surface roughness of the partial regions (5) of greater surface roughness have been produced by laser-beam treatment.

7. Mould according to any of the preceding claims, **characterized in that** the plastics compositions are thermoplastics or thermosets or elastomers.

## Revendications

1. Moule en deux ou plusieurs parties, présentant une cavité de moule (1) pour la production de corps moulés en une masse de matière plastique visqueuse, dans lequel la masse de matière plastique visqueuse peut être injectée dans la cavité de moule (1) par une ouverture de remplissage (3) et se répartit en plusieurs courants fondus en remplissant la cavité de moule (1) et elle forme des lignes de soudure lors de la rencontre de la masse de matière plastique, **caractérisé en ce que** sur les chemins d'écoulement de la masse de matière plastique, la surface des faces de contour formant la cavité de moule (1) est présente une ou plusieurs régions partielles (5) de plus grande rugosité et de plus faible rugosité que leurs régions voisines de la surface des faces de contour formant la cavité de moule (1), dans lequel les chemins d'écoulement de la masse de matière plastique peuvent être influencés et déviés lors de l'écoulement de la masse de matière plastique le long des régions (5) de plus grande rugosité et de plus faible rugosité.

2. Moule selon la revendication 1, **caractérisé en ce qu'**un ou plusieurs noyau(x) (2) pénètre(nt) dans la cavité de moule ou traversent la cavité de moule (1).

3. Moule selon la revendication 2, **caractérisé en ce que** la surface des noyaux présentent une ou plusieurs régions partielles de plus grande rugosité et/ou de plus faible rugosité que leurs régions voisines de la surface des noyaux.

4. Moule selon l'une quelconque des revendications précédentes, **caractérisé en ce que** les régions partielles de plus faible rugosité sont des régions polies.

5. Moule selon l'une quelconque des revendications précédentes, **caractérisé en ce que** la profondeur de rugosité dans les régions partielles (5) de plus grande rugosité vaut entre 1 µm et 1000 µm.

6. Moule selon l'une quelconque des revendications précédentes, **caractérisé en ce que** la rugosité des régions partielles (5) de plus grande rugosité sont produites par traitement au faisceau laser.

7. Moule selon l'une quelconque des revendications précédentes, **caractérisé en ce que** les masses de matière plastique sont des masses thermoplastiques ou thermodurcissables ou des élastomères.
